# EUROPÄISCHE PATENTANMELDUNG

(11) **EP 0 625 724 A1**
(43) Veröffentlichungstag der Anmeldung: **23.11.1994**
(21) Anmeldenummer: 94107456.9
(22) Anmeldetag: 13.05.1994
(51) Int. Cl.: G02F 1/35

(54) **Verfahren zur Polung und Orientierung von organischen Materialien, die nichtlinear optische Chromophore enthalten, und deren Verwendung**

(30) Priorität: 21.05.1993 DE 4317095
(71) Anmelder: BASF Aktiengesellschaft, D-67063 Ludwigshafen (DE)
(72) Erfinder: Schrof, Wolfgang, Dr., D-67271 Neuleiningen (DE); Siemensmeyer, Karl, Dr., D-67227 Frankenthal (DE); Beckmann, Stefan, Dr., D-68167 Mannheim (DE)

(57) **Zusammenfassung**

Die Erfindung betrifft ein Verfahren zur Polung und Orientierung von Schichten E/Z-isomerisierbarer organischer Materialien, die nichtlinear optische Chromophore enthalten, wobei zur Polung und Orientierung an die nichtlinear optische, Donor/-Akzeptor-Struktur aufweisende Chromophore enthaltende Schicht unter gleichzeitiger Bestrahlung ein elektrisches Feld angelegt wird. Dieses Verfahren eignet sich zur Polung und Orientierung von Schichten E/Z-isomerisierbarer Materialien, die nichtlinear optische Chromophore enthalten, in einem Prozeß zur Herstellung von Devices für die nichtlineare Optik.

## Beschreibung

Die Erfindung betrifft ein Verfahren zur Polung und Orientierung von Schichten E/Z-isomerisierbarer organischer Materialien, die nichtlinear optische Chromophore, insbesondere seitenständige nichtlinear optische Chromophore, enthalten, sowie deren Verwendung in optischen Bauelementen, insbesondere in der Nachrichtentechnik.

Polymerisate mit seitenständigen nichtlinear optischen Chromophoren sind bereits bekannt und beispielsweise beschrieben von Dr. Robello in J. Polym. Sci.; Part A; Polymer Chemistry; 28,1 (1990), von A. Buckley in Adv. Mater.; 4,153 (1992) sowie zum Beispiel in den Patentanmeldungen EP-A-0337405 und EP-A-0334176.

Die Orientierungsverteilung in den Polymeren ist zufällig und damit symmetrisch (isotrope Orientierungsverteilungsfunktion). Die Polymeren zeigen keine elektrooptische Aktivität, bevor man nicht eine nicht-zentrosymmetrische Orientierung durch Anlegen eines elektrischen Feldes erzeugt und durch Abkühlen diese polare Orientierung im Glaszustand einfriert. Dieser Ausrichtung im elektrischen Feld steht jedoch eine Randomisierung durch thermische Bewegung entgegen. Ein Polungsprozeß im elektrischen Feld wird z.B. beschrieben von K.R. Singer, J.E. Sohn und S.L. Lalama in J. Appl. Phys. Lett.; 49,248 (1986), sowie von H.-T. Man und N.N. Yoon in Adv. Mater.; 4,159 (1992). Hierzu wird die zu polende Polymerprobe in der Regel bis oberhalb Glastemperatur erwärmt und ein elektrisches Feld, typischerweise ≧ 100 V/m, angelegt. Die Probe wird anschließend abgekühlt bevor man das elektrische Feld wieder entfernt.

Die so orientierten Proben besitzen den entscheidenden Nachteil der uneffizienten Ausrichtung im elektrischen Feld und der damit zwangsläufig verbundenen schnellen thermischen Relaxation der ausgerichteten Chromophore. Ein hoher Orientierungsgrad sowie eine hohe Relaxationsstabilität sind jedoch Voraussetzung für den Einsatz von polymeren Materialien in optischen Bauelementen.

Des weiteren ist die Leitfähigkeit des chromophorhaltigen Polymers bei Temperaturen oberhalb der Glasstufe, welche vorzugsweise weit über 100°C liegen sollten, sehr hoch, so daß nur relativ geringe elektrische Felder bis zum Durchschlagen der zu polenden Probe angelegt werden können, was den Polungsgrad wiederum weiter erniedrigt.

Bekannt ist die E/Z-Isomerisierung von Azofarbstoffen unter dem Einfluß von Licht (siehe z.B. J. March, "Advanced Organic Chemistry", 3rd Edition, 1985, J. Wiley and Sons, S. 110) und deren Anwendung auf dem Gebiet der Flüssigkristalle zur Modifikation anisotroper Eigenschaften (z.B. J. Stumpe, L. Müller, D. Kreysing, Makromol. Chem. Rap. Com.; 12,81 (1991) sowie die Verwendung dieses Effektes zur optischen Informationsspeicherung (z.B. J.H. Wendorff, M. Eich in Molecular crystals liquid crystals, vol. 169 (1989), 133 f.f.). Neben der E/Z-Isomerisierung wird in Chemical Physics Letters die Orientierung von Chromophoren in einer Langmuir Blodgett Schicht durch ein elektrisches Feld bei der Bestrahlung mit Licht beschrieben (Chem. Phys. Lett., 202, 308(1993)). Die Langmuir Blodgett Schichten sind jedoch, wie in der Veröffentlichung auch angegeben, inhomogen und somit nicht als optische Schichten geeignet, da sie in der Regel eine hohe optische Dämpfung zeigen.

Die Aufgabe der vorliegenden Erfindung bestand darin, ein neues Verfahren zur Polung und Orientierung von organischen Materialien, welche nichtlinear optische Chromophore enthalten, zu finden, bei dem eine Polung bei niedriger Temperatur, wenn möglich weit unterhalb der Glastemperatur vorzugsweise bei Raumtemperatur, effizient möglich ist und gleichzeitig eine hohe Stabilität des polar geordneten Zustandes bei Raumtemperatur erreicht werden kann und die Schichtdicke der chromophorhaltigen Schicht zwischen 0,5 und 10 µm liegt.

Gegenstand der vorliegenden Erfindung ist daher ein Verfahren zur Polung und Orientierung von Schichten E/Z-isomerisierbarer organischer Materialien, die nichtlinear optische Chromophore enthalten, das dadurch gekennzeichnet ist, daß zur Polung und Orientierung an die nichtlinear optische, Donor/-Akzeptor-Struktur aufweisende Chromophore enthaltende Schicht, die eine Schichtdicke von 0,5 bis 10 µm aufweist und durch Spincoaten von Lösungen nichtlinear optische, Donor/Akzeptor-Struktur aufweisende Chromophore enthaltender Materialien, durch Aufdampfen oder Aufrakeln nichtlinear optische, Donor/Akzeptor-Struktur aufweisende Chromophore enthaltender Materialien erzeugt worden ist, ein elektrisches Feld bei gleichzeitiger Bestrahlung mit Licht angelegt wird.

Zur Polung wird im allgemeinen ein Feld einer Feldstärke größer 10 V/m angelegt, wobei jedoch höhere Feldstärken, insbesonders oberhalb 1 V/µm bevorzugt sind.

Die Lichtintensität zur Bestrahlung der Schicht ist vorzugsweise größer 1 mW/m², wobei zur Bestrahlung polarisiertes Licht, unpolarisiertes Licht oder auch weißes Licht verwendet werden kann.

Auch ist es für das erfindungsgemäße Verfahren möglich, Licht mit einer definierten Wellenlänge zu verwenden und gleichzeitig mit der Orientierung photochemisch zu vernetzen.

In weiteren Ausführungsformen des erfindungsgemäßen Verfahrens kann die Vernetzung thermisch, durch Bestrahlung mit energiereichen Elektronen, mit sichtbarem Licht oder mit ultraviolettem Licht erfolgen.

Gegenstand der vorliegenden Erfindung ist auch die Verwendung des Verfahrens zur Polung und Orientierung von Schichten E/Z-isomerisierbarer organischer Materialien, welche nichtlinear optische Chromophore enthalten zur Herstellung von Devices für die optische Nachrichtentechnik oder die optische Datenverarbeitung.

Das erfindungsgemäße Verfahren eignet sich für monomere, oligomere und polymere organische Materialien.

Bezüglich der Durchführung des erfindungsgemäßen Verfahrens ist im einzelnen folgendes auszuführen.

Die einzelnen Verfahrensschritte sind im allgemeinen die folgenden:
1. Herstellung der Farbstoffschicht
2. eventuelle Strukturierung
3. Herstellung eventueller Schutzschichten
4. Polung der erhaltenen Probe durch ein elektrisches Feld in Gegenwart von Licht.

Die Herstellung der Farbstoffschichten kann nach unterschiedlichen Verfahren erfolgen. Erfolgreich anwendbar sind hier die allgemein bekannten Methoden des Spincoatens von Lösungen organischer oder anorganischer Materialien, gelöst in geeigneten Lösungsmitteln, wie zum Beispiel N-Methyl-Pyrrolidon, Dimethylformamid, chlorierten Kohlenwasserstoffen, wie zum Beispiel Chloroform, 1,1,1,2-Tetrachlorethan und Methylenchlorid allein und in Mischungen untereinander, aber auch aromatischen Lösungsmitteln, wie zum Beispiel Toluol oder auch Alkoholen with Ethanol, Isopropanol oder Butanol, das Aufrakeln von Lösungen organischer Materialien, gelöst in geeigneten Lösungsmittel der vorgenannten Art sowie das Aufdampfen von organischen oder anorganischen Materialien.

Nach den gleichen Verfahren können eventuell benötigte organische oder anorganische Schutzschichten oder für den Strahlengang benötigte organische oder anorganische optische Schichten hergestellt werden. Schutzschichten bestehen in der Regel aus inerten organischen Polymeren oder inerten anorganischen Materialien, wie zum Beispiel SiO₂. Optische Schichten werden unter anderem zur Herstellung von Streifenwellenleitern benötigt, um die Lichtführung zu gewährleisten. Für die Herstellung der Streifenwellenleiter ist unter Umständen auch eine Strukturierung der Farbstoffschicht notwendig.

Die zum Anlegen des elektrischen Feldes benötigte Elektrodenstruktur kann sowohl das Anlegen eines elektrischen Feldes parallel als auch senkrecht zum einfallenden Lichtstrahl erlauben. Als Elektrodenmaterial eignen sich bevorzugt inerte Materialien, wie zum Beispiel Gold oder Aluminium. Aber auch transparente Elektrodenmaterialien, wie z.B. Indium-Zinn-Oxid, können vorteilhaft sein, wenn eine Elektrodenstruktur gewählt wird, die ein Anlegen des elektrischen Feldes parallel zum einfallenden Licht erlauben soll.

Das zur Polung benötigte elektrische Feld wird über die Elektrodenstruktur an die Farbstoffschicht angelegt. Es weist in der Regel eine Feldstärke von größer 10 V/m auf, um eine Orientierung der Dipolmomente zu erreichen. Höhere Feldstärken, beispielsweise oberhalb 1 V/µm sind jedoch vorteilhaft, weil eine bessere Orientierung der Dipolmomente in der Schicht erreicht wird.

Das Licht, welches zur Bestrahlung der Farbstoffschicht verwendet wird, sollte den Wellenlängenbereich des Lichtes zwischen 350 nm und 800 nm, vorzugsweise den Wellenlängenbereich von 350 nm bis 600 nm und besonders bevorzugt den Wellenlängenbereich zwischen 350 und 550 nm beinhalten. Auch die Bestrahlung mittels Laser mit einer definierten Wellenlänge zwischen 300 und 500 nm ist möglich. Die Lichtintensität sollte mindestens in der Größenordnung von 1 mW/m² liegen. Eine höhere Lichtintensität, beispielsweise von 10 mW/cm², ist jedoch weiter vorteilhaft, da der Orientierungsprozeß dann wesentlich schneller verläuft.

Das Licht kann unter Umständen auch eine Polarisationsrichtung aufweisen. Dies ist jedoch nicht allgemein notwendig, kann aber für manche Orientierungen, insbesondere für Orientierungen, bei denen das elektrische Feld senkrecht zum einfallenden Licht anliegt, notwendig sein.

Wird eine polare Orientierung des Farbstoffes senkrecht zum einfallenden Licht benötigt, so sollte die Elektrodenstruktur das Anlegen eines Feldes senkrecht zum einfallenden Licht erlauben. Das Licht, welches zur Bestrahlung der Farbstoffschicht verwendet wird, sollte für diese Orientierung eine Polarisationsrichtung aufweisen, die senkrecht zum angelegten Feld liegt.

Wird eine polare Orientierung parallel zum einfallenden Licht benötigt, so sollte die Elektrodenstruktur das Anlegen eines elektrischen Feldes parallel zum Einfallenden Licht erlauben. Das Licht, welches zur Bestrahlung der Farbstoffschicht verwendet wird, braucht für diese Orientierung nicht unbedingt polarisiert sein.

Im Prinzip sind dem erfindungsgemäßen Verfahren alle möglichen E/Z-isomerisierbaren organischen Materialien, die nichtlinear optische, Donor/Akzeptor-Struktur aufweisende Chromophore enthalten, zugänglich. Besonders geeignet sind Monomere, Oligomere oder Polymere, die in den Seitenketten nichtlinear optische Chromophore, beispielsweise der folgenden Struktur enthalten: 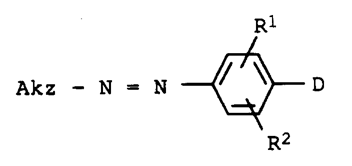
in der R¹, R² unabhängig voneinander ein
- verzweigter oder unverzweigter Alkylrest mit 1 bis 10 Kohlenstoffatomen oder
- ein verzweigter oder unverzweigter Alkoxyrest mit 1 bis 10 Kohlenstoffatomen oder
- Wasserstoff sein kann.

Der Akzeptor (Akz) entspricht vorzugsweise den folgenden aromatischen, carbozyklischen oder heterozyklischen Strukturen: 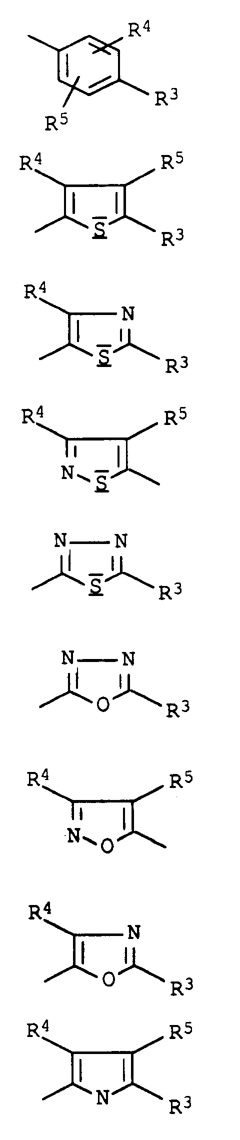
Die Elektronen ziehende Gruppe R³ kann vorzugsweise eine der folgenden Strukturen aufweisen: 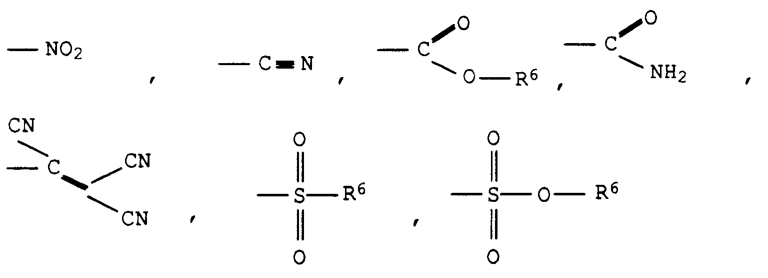
wobei R⁶ einen Alkylrest mit 1 bis 10 C-Atomen, verzweigt oder unverzweigt, darstellt und die Reste R⁴ und R⁵ an den carbozyklischen oder heterozyklischen Strukturen unabhängig voneinander eine der folgenden Strukturen aufweisen können:
C₁-C₁₀-Alkyl, verzweigt oder unverzweigt, Wasserstoff,
C₁-C₁₀-Alkoxy, verzweigt oder unverzweigt, CN, Br, Cl, I, F, NO₂, -OCOR⁶, -CO₂R⁶, NH₂,

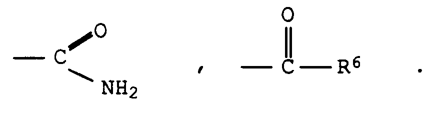

An diesen Positionen sind insbesondere auch Substitutenten möglich, die eine Vernetzungsreaktion erlauben, insbesondere Acrylat-Gruppen, Methacrylat-Gruppen, allylische Gruppen oder Vinyl-Gruppen.

Die Elektronen schiebende Gruppe D kann z.B. vom folgenden Grundtypus sein: 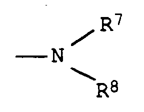
wobei die Reste R⁷ und R⁸ unabhängig voneinander folgende Strukturen darstellen können:
C₁- bis C₁₀-Alkyl,
Hydroxyalkyl mit C₁- bis C₁₀-alkyl, gegebenenfalls substituiert mit einem Acrylsäure- oder Methacrylsäure- oder Vinylalkoholrest oder gegebenenfalls gebunden an eine Zentraleinheit wie zum Beispiel 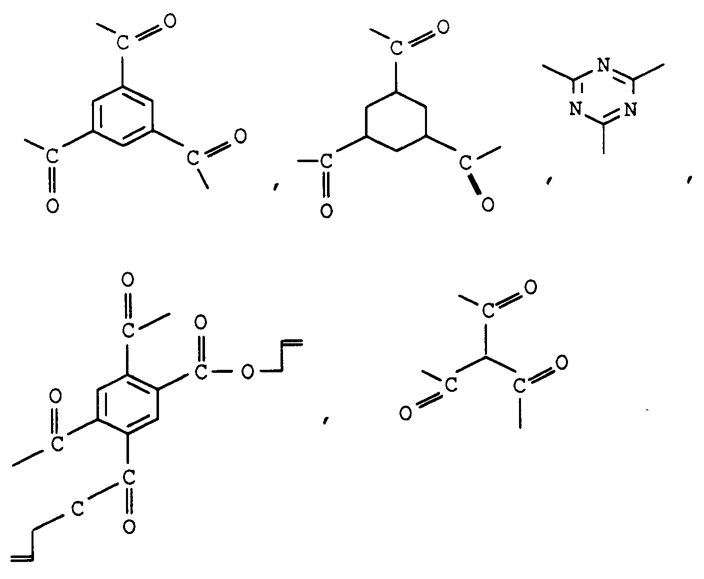
oder gegebenenfalls gebunden an ein Arylsäure- oder Methacrylsäurepolymer oder deren Copolymerisate, wobei R⁷ und R⁸ auch Bestandteile eines gemeinsamen Ringsystems, beispielsweise der folgenden Struktur 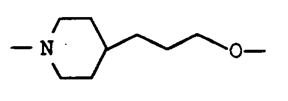
darstellen können.

Insbesondere sind die folgenden Materialien, welche aber nur beispielhaft genannt werden sollen, vorteilhaft im erfindungsgemäßen Verfahren einzusetzen: 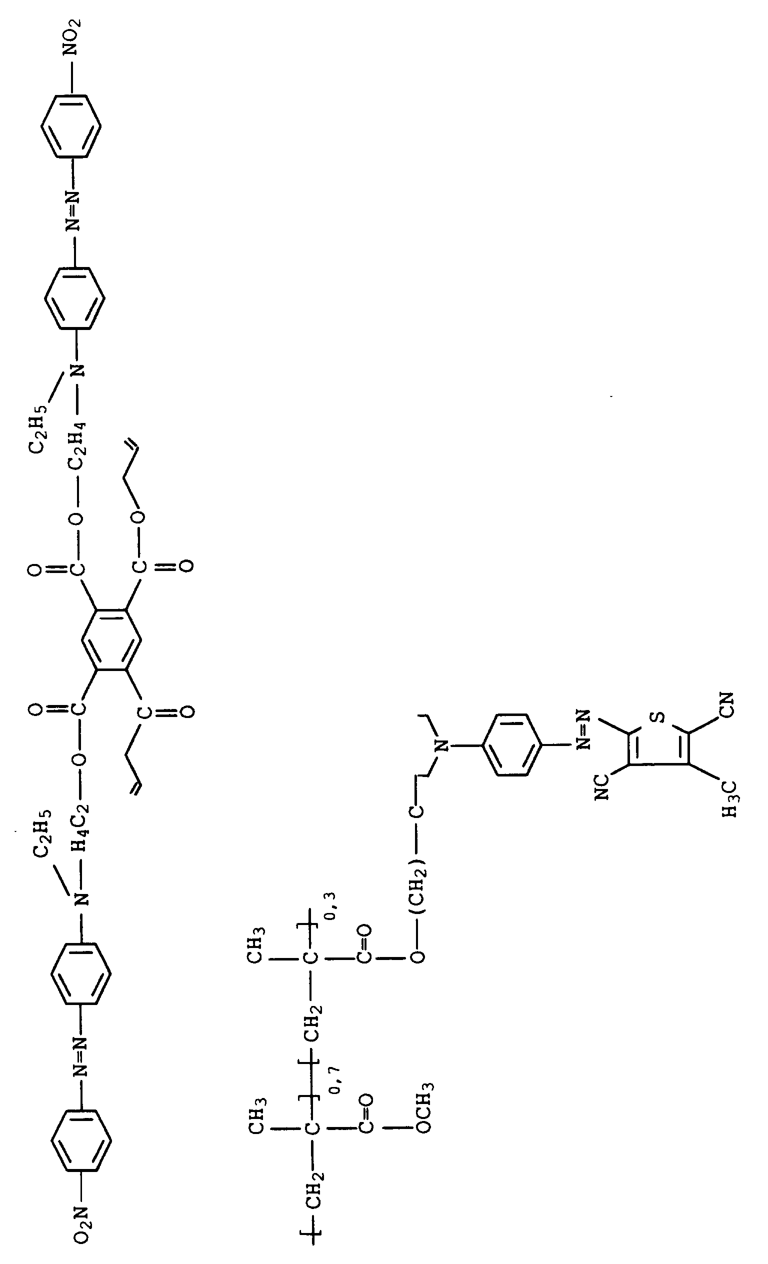 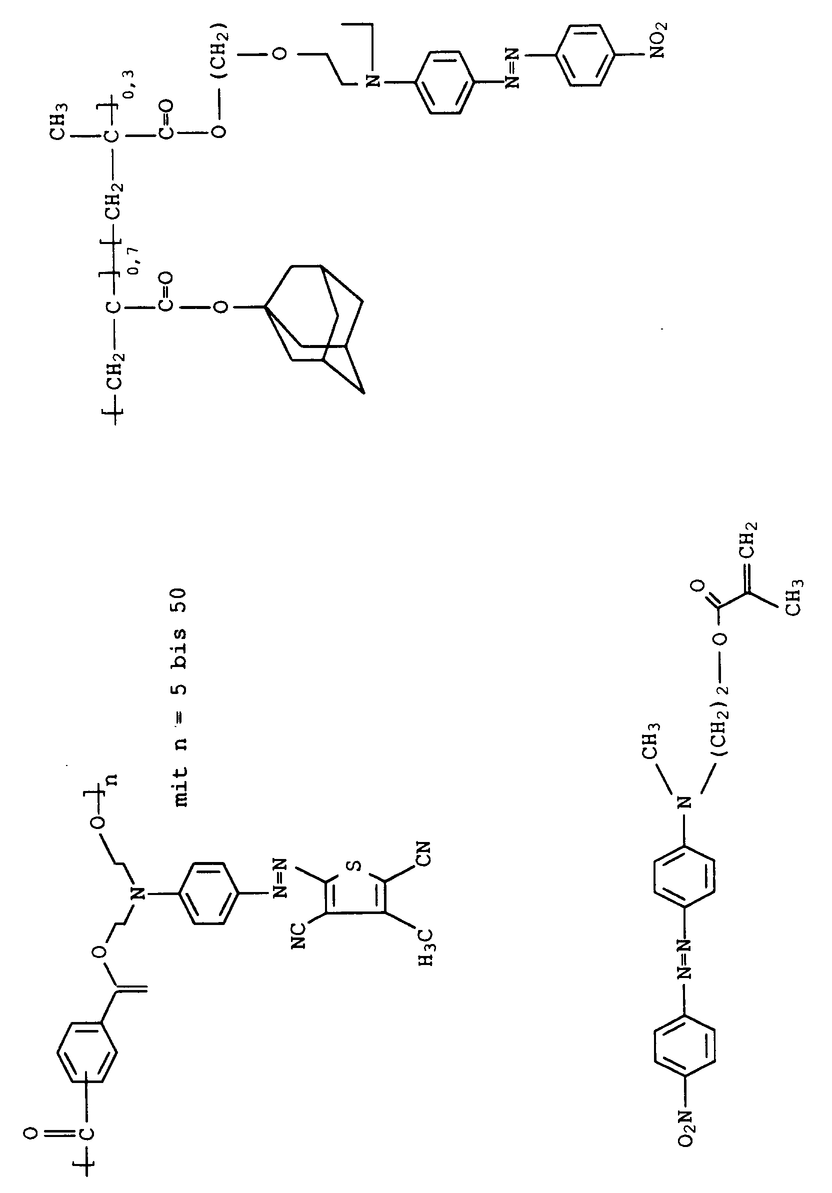
Als Lösungsmittel dieser Materialien für die einzelnen Prozeßschritte kommen bevorzugt N-Methyl-Pyrrolidon, Dimethylformamid, chlorierte Kohlenwasserstoffe wie zum Beispiel Chloroform, Methylenchlorid und 1,1,1,2-Tetrachlorethan oder auch aromatische Lösungsmittel wie zum Beispiel Toluol allein oder in Mischungen untereinander zum Einsatz.

Für jeden einzelnen Prozeßschritt können auch Hilfsmittel verwendet werden, die insbesondere die Benetzungsfähigkeit der Substratoberfläche, die Löslichkeit des chromophorhaltigen Materials, bzw. die Viskosität der Lösung des chromophorhaltigen Materials beeinflußen.

Das Verfahren zur Polung und Orientierung von Schichten E/Z-isomerisierbarer organischer Materialien, die nichtlinear optische Chromophore enthalten, wobei zur Polung und Orientierung an die nichtlinear optische, Donor/-Akzeptor Struktur aufweisende Chromophore enthaltende Schicht, die eine Schichtdicke von 0,5 bis 10 µm aufweist und durch Spincoaten von Lösungen nichtlinear optischer, Donor-Akzeptor-Struktur aufweisender Chromophore enthaltender Materialien oder durch Aufdampfen von nichtlinear optischer, Donor-Akzeptor Struktur aufweisender Materialien oder durch Aufrakeln nichtlinear optischer, Donor-Akzeptor Struktur aufweisender Materialien erzeugt worden ist, ein elektrisches Feld bei gleichzeitiger Bestrahlung mit Licht angelegt wird, ist ein besonders Material und Device schonendes Verfahren zur Polung und Orientierung, da es gegenüber anderen Verfahren zur Polung und Orientierung folgende Vorteile aufweist:
- Die anlegbaren Feldstärken bei Raumtemperatur sind wesentlich höher als bei Temperaturen oberhalb der Glastemperatur, die für NLO-Systeme vorzugsweise oberhalb 100°C liegen. Damit verbunden ist der mögliche Grad der Polung, abhängig von der Höhe des beim Polungsprozeß anliegenden Feldes, größer und damit der nichtlinear optische Effekt größer.
- Bei hohen Temperaturen ist die Gefahr für das Device beim Polungsprozeß wegen der erhöhten Leitfähigkeit groß. Durch die geringere Leitfähigkeit bei Raumtemperatur wird damit die Gefahr eines Durchschlages und damit die Zerstörung des Devices minimiert.

Die in den Beispielen genannten Teil oder Prozente sind, soweit nicht anders angegeben, Gewichtsteile bzw. Gewichtsprozente.
I. Allgemeine Arbeitsvorschrift zur Herstellung dünner Farbstoffschichten durch Spincoaten:
   Es wird 1 g eines Farbstoffes in einem geeigneten Lösungsmittel, z.B. N-Methyl-Pyrrolidon (NMP) oder 1,1,1,2-Tetrachlorethan (TCE), gelöst. Diese Lösung wird über verschiedene Filter (Porengröße 3 µm und 0,3 µm) filtriert, um sie von Staub und eventuell ungelösten Farbstoffresten zu befreien.
   Die so hergestellte Lösung wird dann auf das Substrat vollflächig aufgetragen und überschüssige Farbstofflösung durch Schleudern mit einer Umdrehungszahl zwischen 1000 U/min und 3000 U/min abgeschleudert. Das Lösungsmittel wird dann im Vakuum bei Temperaturen zwischen 40°C und 120°C langsam abgezogen. Die sich bildende amorphe Schicht (Schichtdicke: ca 1,0 µm) wird dann bei Temperaturen um 120°C für ca. 8 h getempert. Man erhält nach Abkühlen eine isotrope, glasartig erstarrte, farbstoffhaltige Schicht.
II. Aufbau des Experimentes zur Messung der Intensität des frequenzverdoppelten Lichtes (Second-Harmonic-Generation = SHG). Die zu untersuchende Probe wird mit horizontal polarisiertem Laserlicht der Wellenlänge 1572 nm, welches auf die Probe fokussiert wird, beleuchtet. Zur Entfernung eventuell anderweitig erzeugter SHG-Intensität wird ein Kantenfilter mit einer Absorbtionskante bei 850 nm der Probe vorgeschaltet. Hinter der Probe befindet sich in der angegebenen Reihenfolge ein Wärme-Filter, sowie ein Doppelmonochromator, welcher auf eine Wellenlänge von 786 nm eingestellt ist, und ein Photomultiplier zur Detektion der einfallenden Lichtintensität. Das SHG-Signal wird mit einem Oszilloskop aufgenommen und dann über einen Rechner weiter verarbeitet. Die Probe ist auf einem um die Vertikale drehbaren Tisch eingespannt. Durch Drehung der Probe um die Vertikale wird nun in Abhängigkeit vom Winkel die SHG-Intensität mit einem Photomultiplier in mV gemessen.

Der verwendete Farbstoff besaß die folgende Struktur (sowie dessen Isomere): 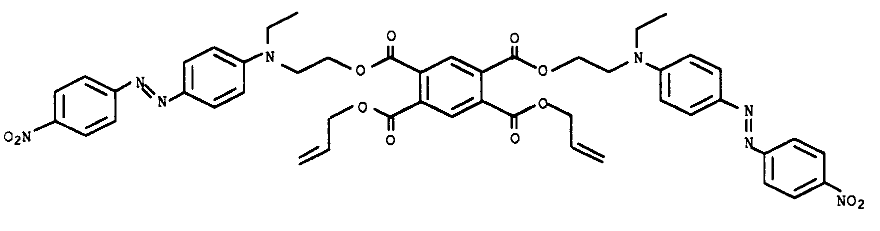
Sein Absorbtionsmaximum liegt bei 460 nm. Der Farbstoff bildet ein amorphes Glas bei Abkühlung aus der isotrop flüssigen Phase oder nach Abziehen des Lösungsmittels nach dem Aufschleudern. Die Glastemperatur liegt bei 35°C.

### Vergleichsbeispiel 1

### Orientierung von Chromophoren mit Licht bei Raumtemperatur (unterhalb der Glasstufe)

Die Herstellung der Probe erfolgte analog obiger allgemeiner Vorschrift durch Spincoaten einer Lösung des Polymeren in C₂H₂Cl₄ auf ein mit Indium-Zinn-Oxid leitfähig beschichtetes transparentes Glassubstrat und anschließendes Bedampfen der Farbstoffschicht mit Gold als Gegenelektrode.

Die Belichtung der Probe erfolgte mit unpolarisiertem Halogenlicht, (Kaltlichtquelle KL 1500 der Fa. Schott, Mainz) bei voller Leistung der Lichtquelle.

Nach einer Bestrahlungszeit von 2 min wurde die Lichtquelle entfernt und die Probe im konoskopischen Strahlengang des Mikroskopes auf doppelbrechende Eigenschaften untersucht. Das mikroskopische Bild ergab, daß eine positiv einachsig doppelbrechende Struktur entstanden war.

Ein Experiment zur Bestimmung der SHG-Intensität verlief negativ.

### Vergleichsbeispiel 2

### Orientierung von Chromophoren im elektrischen Feld (unterhalb der Glasstufe)

Die Herstellung der Probe erfolgte analog der angegebenen Herstellvorschrift I. An die Probe wurde bei Raumtemperatur eine Spannung von 50.000 kV/m angelegt. Die Schichtdicke der Probe betrug 0,8 µm. Nach 10 min wurde das elektrische Feld abgeschaltet. Die Probe zeigte im Anschluß an diese Behandlung weder doppelbrechende Eigenschaften noch eine meßbare NLO-Aktivität im SHG-Experiment.

### Beispiel

### Orientierung der Chromophore in Gegenwart von Licht und elektrischem Feld

Die Herstellung der Probe erfolgte entsprechend der allgemeinen Herstellvorschrift I. An die Probe wurde bei Raumtemperatur ein elektrisches Gleichfeld von 50.000 kV/m angelegt. Dann wurde die Probe bei angelegtem elektrischem Feld mit unpolarisiertem Licht bestrahlt.

Nach einer Bestrahlungszeit von 2 min wurde die Lichtquelle entfernt und das Feld abgeschaltet.

Die mikroskopische Untersuchung der Probe ergab, daß wiederum wie im Vergleichsbeispiel 1 eine einachsig positive doppelbrechende Struktur entstanden ist. Das SHG-Experiment (vgl. Tabelle) zeigt jedoch im Gegensatz zu Vergleichsbeispiel 1 und 2 eine deutliche Intensität der zweiten Harmonischen. Es ist damit durch Bestrahlung mit Licht bei anliegendem elektrischem Feld möglich, weit unterhalb der Glastemperatur eine polare Orientierung zu erzeugen, welche nichtlinear optische Eigenschaften zeigt.

| | Vergleichsbeispiele | | Beispiel |
|---|---|---|---|
| | 1 | 2 | |
| Winkel | I_{SHG} | I_{SHG} | I_{SHG} |
| zwischen Zelle und Laserlichtstrahl: | arbitrary Units (mV) | arbitrary Units (mV) | arbitrary Units (mV) |

| [°] | | | |
|---|---|---|---|
| -75 | 0 | 0 | 0,18 |
| -50 | 0 | 0 | 0,24 |
| -25 | 0 | 0 | 0,05 |
| 0 | 0 | 0 | 0 |
| 25 | 0 | 0 | 0,5 |
| 50 | 0 | 0 | 0,26 |
| 75 | 0 | 0 | 0,16 |

## Patentansprüche

1. Verfahren zur Polung und Orientierung von Schichten E/Z-isomerisierbarer organischer Materialien, die nichtlinear optische Chromophore enthalten, dadurch gekennzeichnet, daß zur Polung und Orientierung an die nichtlinear optische, Donor/Akzeptor-Struktur aufweisende Chromophore enthaltende Schicht, die eine Schichtdicke von 0,5 bis 10 µm aufweist und durch Spincoaten von Lösungen nichtlinear optische, Donor/Akzeptor-Struktur aufweisende Chromophore enthaltender Materialien, durch Aufdampfen oder Aufrakeln nichtlinear optische, Donor/Akzeptor-Struktur aufweisende Chromophore enthaltender Materialien erzeugt worden ist, ein elektrisches Feld bei gleichzeitiger Bestrahlung mit Licht angelegt wird.

2. Verfahren nach Anspruch 1, dadurch gekennzeichnet, daß zur Polung ein Feld einer Feldstärke größer 10 V/m angelegt wird.

3. Verfahren nach Anspruch 1, dadurch gekennzeichnet, daß die Lichtintensität zur Bestrahlung der Schicht größer 1 mW/m² ist.

4. Verfahren nach einem der Ansprüche 1 bis 3 dadurch gekennzeichnet, daß gleichzeitig mit der Orientierung photochemisch vernetzt wird.

5. Verfahren nach einem der Ansprüche 1 bis 4, dadurch gekennzeichnet, daß die Vernetzung thermisch erfolgt.

6. Verfahren nach einem der Ansprüche 1 bis 5, dadurch gekennzeichnet, daß die Vernetzung durch Bestrahlung mit energiereichen Elektronen erfolgt.

7. Verfahren nach einem der Ansprüche 1 bis 6, dadurch gekennzeichnet, daß die Vernetzung mit sichtbarem Licht oder mit ultraviolettem Licht erfolgt.

8. Verwendung des Verfahrens zur Polung und Orientierung von Schichten E/Z-isomerisierbarer organischer Materialien, welche nichtlinear optische Chromophore enthalten, nach einem der vorhergehenden Ansprüche, zur Herstellung von Devices für die optische Nachrichtentechnik oder die optische Datenverarbeitung.
